# EUROPÄISCHE PATENTSCHRIFT

(11) **EP 3 507 853 B1**
(45) Veröffentlichungstag und Bekanntmachung des Hinweises auf die Patenterteilung: **11.11.2020**
(21) Anmeldenummer: 17771990.3
(22) Anmeldetag: 30.08.2017
(51) Int. Cl.: H01M 10/6555, H01M 2/20, H01M 10/613, H01M 10/643, H01M 2/10

(54) **PLATINE ZUR VERBINDUNG VON BATTERIEZELLEN**
PRINTED CIRCUIT BOARD FOR CONNECTING BATTERY CELLS
PLATINE DE CONNEXION D'ÉLÉMENTS DE BATTERIE

(30) Priorität: 30.08.2016 DE 202016104759 U; 05.09.2016 DE 102016116581; 02.11.2016 DE 102016120835
(43) Veröffentlichungstag der Anmeldung: 10.07.2019
(60) Teilanmeldung: 19176503.1
(73) Patentinhaber: E-Seven Systems Technology Management Ltd, Valletta, VLT 1455 (MT)
(72) Erfinder: KRÄMER, Thomas, St. Julian's STJ 3140 (MT)
(74) Vertreter: Cohausz & Florack
(86) Internationale Anmeldenummer: PCT/EP2017/071744
(87) Internationale Veröffentlichungsnummer: WO 2018/041882

(56) Entgegenhaltungen:
- WO-A1-2015/036322
- WO-A1-2015/164593
- CN-A- 105 552 289
- US-A1- 2013 136 955

## Beschreibung

Die vorliegende Erfindung betrifft eine Platine zur Verbindung von Batteriezellen, die teilweise aus einem nicht elektrisch leitfähigen Material ausgebildet ist, wobei die Platine auf einer ersten Seite und auf einer zweiten Seite jeweils elektrisch und thermisch leitfähige Kontaktierungsabschnitte aufweist, und wobei jeder Kontaktierungsabschnitt mit jedem anderen Kontaktierungsabschnitt elektrisch und thermisch leitfähig verbunden ist.

Aus dem Stand der Technik ist es bekannt, dass innerhalb einer Batterie Batteriezellen miteinander über eine Platine miteinander elektrisch und thermisch leitfähig verbunden werden können. Dies erlaubt es, einen elektrischen Strom und einen Wärmestrom möglichst gleichmäßig innerhalb einer Batterie mittels einer solchen Platine zu verteilen. Hierdurch wird es insbesondere verhindert, dass sich in der Batterie lokale thermische Hot-Spots bilden, was besonders nachteilig für den Betrieb der Batterie ist. Es ist erwünscht, dass die Betriebstemperatur der Batterie möglichst niedrig gehalten wird.

Die US 2013136955 A1 offenbart ein Batteriesystem mit einer hohen thermischen Leitfähigkeit.

Die CN105552289 A beschreibt ein paralleles Netzwerk mit Sicherheitsfunktion und eine Batterie mit großer Kapazität, die dieses Netzwerk verwendet.

Der vorliegenden Erfindung liegt deshalb die Aufgabe zugrunde, eine Platine bereitzustellen, die dazu geeignet ist, einen Wärmestrom innerhalb einer Batterie nicht nur zu verteilen, sondern auch aus dieser abzuführen.

Die Aufgabe wird erfindungsgemäß mit einer Platine nach dem Patentanspruch 1 gelöst.

Die Platine der eingangs genannten Art ist erfindungsgemäß so ausgebildet, dass in dem nicht elektrisch leitfähigen Material der Platine ein Kern aus einem elektrisch leitfähigen und thermisch leitfähigen Material flächig angeordnet ist, wobei auf dem Kern abgewandten Seiten des nicht elektrisch leitfähigen Materials jeweils die Kontaktierungsabschnitte angeordnet sind, und wobei mindestens ein elektrisch und thermisch leitfähiges Durchführungselement sich durch den Kern und durch das auf dem Kern beidseitig angeordnete, nicht elektrisch leitfähige Material erstreckt, und wobei das Durchführungselement gegenüber dem Kern elektrisch isoliert ist und elektrisch leitfähig mit den Kontaktierungsabschnitten auf der ersten Seite und mit den Kontaktierungsabschnitten auf der zweiten Seite verbunden ist, sodass eine elektrisch und thermisch leitfähige Verbindung der Kontaktierungsabschnitte auf der ersten Seite mit den Kontaktierungsabschnitten auf der zweiten Seite durch das Durchführungselement hergestellt wird und ein Wärmestrom durch den Kern aufgenommen und aus der Platine abgeführt werden kann.

Der Kern ist aus einem sowohl elektrisch als auch thermisch leitfähigen Material ausgeführt. Elektrisch leitfähige Materialien bieten oftmals den Vorteil, dass sie auch thermisch sehr gut leitfähig sind. Der Kern ist in dem nicht elektrisch leitfähigen Material der Platine angeordnet. Dabei ist der Kern vorzugsweise flächig ausgeführt. So kann es sich bei dem Kern um eine Platte aus einem elektrisch und thermisch leitfähigen Material handeln, an dem beidseitig das nicht elektrisch leitfähige Material angeordnet ist. Das nicht elektrisch leitfähige Material ist dabei vorzugsweise flächig auf den Kern aufgebracht. Der Kern muss aber nicht notwendigerweise flächig ausgestaltet sein. So ist es erfindungsgemäß auch möglich, dass der Kern aus einzelnen Leiterelementen oder einem Gewebe von Leiterelementen ausgeführt ist. Abweichende geometrische Formen des Kerns sind erfindungsgemäß auch möglich. Mindestens ein elektrisch und thermisch leitfähiges Durchführungselement ist durch das nicht elektrisch leitfähige Material und den Kern hindurchgeführt. Es verbindet die Kontaktierungsabschnitte auf der ersten Seite der Platine elektrisch leitfähig mit den Kontaktierungsabschnitten auf der zweiten Seite der Platine. Dabei kann es die beiden Kontaktierungsabschnitte entweder unmittelbar oder aber indirekt, so zum Beispiel über weitere elektrisch und thermisch leitfähige Elemente, miteinander verbinden. Das Durchführungselement ist gegenüber dem Kern elektrisch isoliert. Dies ist notwendig, damit ein elektrischer Strom von dem Durchführungselement nicht aus der Platine über den Kern austreten kann. Dies ist in der Regel unerwünscht, da ein elektrischer Strom durch die Platine über mehrere Batteriezellen verteilt werden soll, aber nicht aus der Platine an weitere Elemente wie beispielsweise eine Wärmesenke, die mit dem Kern verbunden ist, abgeführt werden soll. Da es wesentlich aufwendiger ist, die Wärmesenke elektrisch leitfähig gegenüber weiteren Komponenten elektrisch zu isolieren, wird erfindungsgemäß bereits der Kern elektrisch leitfähig gegenüber einem durch die Verbindungselemente geführten elektrischen Strom isoliert. Die elektrische Isolierung kann dadurch bewirkt werden, dass ein elektrisch nicht leitfähiges Material das Durchführungselement in dem Kern umgibt. Dabei ist das das Durchführungselement umgebende nicht elektrisch leitfähige Material vorzugsweise in einer thermisch leitfähigen Verbindung sowohl mit dem Kern als auch mit dem Durchführungselement. Somit kann ein Wärmestrom von dem mindestens einen Durchführungselement auf den Kern geführt werden.

Erfindungsgemäß kann das nicht elektrisch leitfähige Material aus einem gängigen Substratmaterial ausgebildet sein, das bei Platinen beziehungsweise Leiterplatten Verwendung findet. Die elektrisch und thermisch leitfähigen Kontaktierungsabschnitte sowie die elektrisch und thermisch leitfähigen Durchführungselemente sind vorzugsweise aus einem Metall ausgeführt. Ganz besonders bevorzugt handelt es sich dabei um Kupfer. Dies ist vorteilhaft, denn Kupfer weist eine besonders gute elektrische und thermische Leitfähigkeit auf. Die Platine kann unter Anwendung dem Fachmann bekannter Fertigungsverfahren für Leiterplatten kostengünstig hergestellt werden.

Gemäß einer möglichen Ausführungsform der Erfindung sind die Kontaktierungsabschnitte und sonstige elektrisch und thermisch leitfähige Elemente auf der der ersten Seite und auf der zweiten Seite der Platine spiegelbildlich zueinander angeordnet. Gemäß einer alternativen Ausführungsform der Erfindung ist hingegen das Layout auf der ersten Seite und auf der zweiten Seite der Platine unterschiedlich ausgebildet.

Bevorzugt ist der Kern aus einer Kante der Platine mindestens abschnittsweise herausgeführt oder liegt an dieser frei. Somit ist der Kern dazu geeignet, thermische Energie seitlich aus der Platine herauszuführen. Der Kern kann dabei an mehreren Kanten der Platine aus dieser herausgeführt sein oder freiliegen. Bevorzugt ist der Kern in Umfangsrichtung vollständig aus einer Kante der Platine herausgeführt oder liegt an dieser in Umfangsrichtung vollständig frei. Es ist erfindungsgemäß auch möglich, dass der Kern nicht an einer Kante der Platine freiliegt oder aus dieser herausgeführt ist, sondern durch eine Aussparung in dem nicht leitfähigen Material der Platine hindurch aus der Platine herausgeführt ist. Dabei sollte es sichergestellt werden, dass der Kern in diesem Bereich einen hinreichend großen Querschnitt aufweist, sodass gewährleistet werden kann, dass ein ausreichend großer Wärmestrom aus der Platine herausgeführt werden kann.

Gemäß einer besonderen Ausführungsform der Erfindung ist der Kern mit einem thermisch leitfähigen Wärmeabfuhrelement thermisch leitfähig verbunden oder der Kern bildet ein thermisch leitfähiges Wärmeabfuhrelement, wobei das Wärmeabfuhrelement einen ersten flächigen Abschnitt aufweist, der in einer Ebene der Platine liegt, und wobei das Wärmeabfuhrelement einen zweiten flächigen Abschnitt aufweist, der in einer weiteren Ebene liegt, die in einem rechten Winkel zu der Ebene der Platine ausgerichtet ist. Ein solches Wärmeabfuhrelement ist besonders gut dazu geeignet, um einen Wärmestrom aus einer Batterie abzuführen. Der erste flächige Abschnitt ist dabei dazu geeignet, einen Wärmestrom aus einer Zellanordnung einer Batterie, in der die Platine angeordnet ist, herauszuführen. Der zweite flächige Abschnitt des Wärmeabfuhrelements ist dazu geeignet, diesen Wärmestrom an eine Wärmesenke abzugeben. Dazu kann der zweite flächige Abschnitt flächig an einer Wärmesenke anliegen. Bei dieser Wärmesenke kann es sich um ein Gehäuse handeln, das um eine Zellanordnung, in der die Platine angeordnet ist, herumgeführt ist. Es kann sich aber bei der Wärmesenke um ein sonstiges Kühlelement handeln. Da der zweite flächige Abschnitt des Wärmeabfuhrelements flächig ausgeführt ist, kann ein besonders großer Wärmestrom über diesen an eine Wärmesenke abgeführt werden.

Erfindungsgemäß kann der Kern innerhalb der Platine aus einem Metall ausgeführt sein. Die meisten Metalle weisen nicht nur eine sehr gute elektrische, sondern auch eine sehr gute thermische Leitfähigkeit auf. Erfindungsgemäß kann der Kern dabei aus Kupfer ausgeführt sein. Der Kern kann alternativ jedoch auch aus einem sonstigen Metall oder aus einer Metalllegierung ausgeführt sein.

Besonders bevorzugt ist der Kern aus Aluminium ausgeführt. Aluminium weist eine sehr gute thermische Leitfähigkeit auf, weist aber auch eine niedrige Dichte auf. Hierdurch kann die Platine besonders leicht ausgeführt werden, was einen deutliche Auswirkung auf ein Gewicht einer Batterie haben kann, in der eine Vielzahl erfindungsgemäßer Platinen vorgesehen sind.

Die Platine ist erfindungsgemäß so ausgestaltet, dass auf der ersten Seite der Platine ein elektrisch und thermisch leitfähiger Verbindungsabschnitt angeordnet ist, der die Kontaktierungsabschnitte auf der ersten Seite der Platine elektrisch und thermisch leitfähig miteinander verbindet, und wobei den Kontaktierungsabschnitten auf der ersten Seite jeweils eine elektrische Sicherung zugeordnet ist und der Verbindungsabschnitt auf der ersten Seite der Platine mit jedem Kontaktierungsabschnitt auf der ersten Seite der Platine über eine diesem Kontaktierungsabschnitt zugeordnete elektrische Sicherung verbunden ist, sodass die Kontaktierungsabschnitte auf der ersten Seite der Platine gegenüber dem Verbindungsabschnitt elektrisch gesichert sind. Dies ist insbesondere dann vorteilhaft, wenn ein Innenwiderstand einer Batteriezelle, mit der die Platine verbunden ist, aufgrund eines Fehlers in der Batteriezelle zusammenbricht, sodass ein zu hoher Strom durch diese Batteriezelle fließt. In diesem Fall wird eine elektrische Sicherung ausgelöst, die einem Kontaktierungsabschnitt der Platine zugeordnet ist, der mit der fehlerhaften Batteriezelle elektrisch und thermisch leitfähig verbunden ist. Ein überhöhter Strom kann somit aus der defekten Batteriezelle nicht in den Verbindungsabschnitt fließen. Im Ergebnis sind weitere Batteriezellen, die an weiteren Kontaktierungsabschnitten der Platine elektrisch und thermisch leitfähig anliegen, gegenüber der fehlerhaften Batteriezelle elektrisch gesichert.

Erfindungsgemäß ist das mindestens eine Durchführungselement so angeordnet, dass es den Verbindungsabschnitt auf der ersten Seite der Platine mit den Kontaktierungsabschnitten auf der zweiten Seite der Platine elektrisch und thermisch leitfähig verbindet, sodass jeder Kontaktierungsabschnitt auf der ersten Seite gegenüber jedem anderen Kontaktierungsabschnitt auf der ersten Seite der Platine und gegenüber jedem Kontaktierungsabschnitt auf der zweiten Seite der Platine durch mindestens eine elektrische Sicherung gesichert ist. Hierdurch wird eine elektrische Sicherung aller Kontaktierungsabschnitte gegeneinander erreicht. Mit einer solchen Anordnung kann es vermieden werden, dass eine unnötig große Anzahl an Sicherungen vorgesehen werden muss. So ist es bei der erfindungsgemäßen Anordnung insbesondere nicht notwendig, dass leitfähige Durchführungselemente, die Kontaktierungsabschnitte der ersten Seite und der zweiten Seite der Platine miteinander verbinden, als Sicherungen dimensioniert werden müssen. Es sind jedoch auch alternative Ausführungsformen der Erfindung möglich, gemäß denen Durchführungselemente als Sicherungen dimensioniert sind. Erfindungsgemäß ist es insbesondere möglich, dass Durchführungselemente nicht in einem Verbindungsabschnitt angeordnet sind, sondern jeweils unmittelbar Kontaktierungsabschnitte auf der ersten Seite und auf der zweiten Seite der Platine miteinander verbinden.

Es ist vorteilhaft, wenn der Verbindungsabschnitt als eine flächige, elektrisch und thermisch leitfähige Schicht auf der ersten Seite der Platine ausgebildet ist. Wenn der Verbindungsabschnitt als eine flächige Schicht ausgebildet ist, dann weist er eine sehr große elektrische und thermische Leitfähigkeit auf und ist somit besonders gut dafür geeignet, einen elektrischen und einen thermischen Strom zwischen den Kontaktierungsabschnitten auf der ersten Seite der Platine zu verteilen. Alternativ kann der Verbindungsabschnitt als ein Verbund von Leiterbahnen ausgebildet sein, die miteinander elektrisch und thermisch leitfähig verbunden sind. Ein Verbund von Leiterbahnen bietet den Vorteil, dass dabei weniger elektrisch und thermisch leitfähiges Material für den Verbindungsabschnitt aufgewandt werden muss. Es verbleibt dabei auf der Platine zusätzlicher Platz für sonstige Komponenten, die auf dem nichtleitenden Material angeordnet werden können.

Vorzugsweise sind die Kontaktierungsabschnitte auf der zweiten Seite der Platine in einem flächigen, elektrisch und thermisch leitfähigen Verbindungs- und Kontaktierungsbereich auf der zweiten Seite der Platine angeordnet. Wenn der Verbindungs- und Kontaktierungsbereich auf der zweiten Seite der Platine als eine flächige Schicht ausgebildet ist, dann weist er eine sehr große elektrische und thermische Leitfähigkeit auf und ist somit besonders gut dafür geeignet, einen elektrischen und einen thermischen Strom zwischen den Kontaktierungsabschnitten auf der zweiten Seite der Platine zu verteilen. Der Verbindungs- und Kontaktierungsbereich kann jedoch auch abweichend ausgebildet sein. So sind auch Ausführungsformen denkbar, bei denen den die zweite Seite einen Verbindungsabschnitt und Kontaktierungsabschnitte aufweist, die spiegelbildlich zu dem Verbindungsabschnitt und den Kontaktierungsabschnitten auf der ersten Seite der Platine ausgebildet sind. Dabei kann erfindungsgemäß auch jedem Kontaktierungsabschnitt auf der zweiten Seite der Platine eine Sicherung zugeordnet sein. Jedoch sind Sicherungen an den Kontaktierungsabschnitten auf der zweiten Seite der Platine nicht unbedingt notwendig, da sich herausgestellt hat, dass in einem Fehlerfall lediglich auf der ersten Seite angeordnete Sicherungen ausreichend sind, um mit der Platine elektrisch und thermisch verbundene Batteriezellen ausreichend zu schützen. Aus diesem Grund wird eine Ausführungsform der Erfindung mit einem flächigen Verbindungs- und Kontaktierungsbereich bevorzugt, in dem Kontaktierungsabschnitte nicht in besonderer Weise von dem Verbindungs- und Kontaktierungsbereich getrennt sind.

Gemäß einer besonderen Ausführungsform der Erfindung ist der Verbindungsabschnitt auf der ersten Seite mit dem Verbindungs- und Kontaktierungsbereich auf der zweiten Seite durch das elektrisch nicht leitfähige Material hindurch vorzugsweise elektrisch und thermisch leitfähig verbunden. Somit ist es nicht notwendig, dass der Verbindungsabschnitt auf der ersten Seite der Platine unmittelbar mit einem Kontaktierungsbereich auf der zweiten Seite elektrisch und thermisch leitfähig über ein Kontaktierungselement verbunden ist. Stattdessen kann eine elektrisch und thermisch leitfähige Verbindung zwischen dem Verbindungsabschnitt auf der ersten Seite und dem Verbindungs- und Kontaktierungsbereich auf der zweiten Seite bestehen. Dabei kann ein elektrischer und ein thermischer Strom über den Verbindungs- und Kontaktierungsbereich zu den Kontaktierungsabschnitten auf der zweiten Seite der Platine geführt werden.

Gemäß einer weiteren Ausführungsform der Erfindung sind um jeden Kontaktierungsabschnitt auf der ersten Seite der Platine mehrere Durchführungselemente gleichmäßig von dem Kontaktierungsabschnitt beabstandet angeordnet. Es hat sich herausgestellt, dass durch die Bereitstellung mehrerer Durchführungselemente ein elektrischer und thermischer Strom ganz besonders gut von der ersten Seite der Platine zur zweiten Seite der Platine geleitet werden kann. Dabei hat es sich als vorteilhaft herausgestellt, wenn die Durchführungselemente in der Nähe der Kontaktierungsabschnitte in dem Verbindungsabschnitt auf der ersten Seite der Platine angeordnet sind. Ganz besonders gut geeignet ist hierbei eine kreisförmige Anordnung der Durchführungselemente um die Kontaktierungsabschnitte herum. Eine Anzahl von sechs bis zwölf Durchführungselementen hat sich als besonders vorteilhaft herausgestellt. Erfindungsgemäß kann das mindestens eine Durchführungselement auf einem Innenrand einer Durchführungsaussparung angeordnet sein, die das nicht leitfähige Material durchläuft. Die Durchführungsaussparung kann kreisförmig ausgeführt sein oder eine sonstige Form aufweisen. Das Durchführungselement ist dabei vorzugsweise eine Metallschicht, die erfindungsgemäß auf den Innenrand der Durchführungsaussparung aufgedampft oder aufgedruckt sein kann. Die Durchführungsaussparung kann in das nicht leitfähige Material gebohrt oder gestanzt sein. Das Durchführungselement kann jedoch auch abweichend ausgeführt sein und insbesondere nicht notwendigerweise entlang einer Durchführungsaussparung durch das nicht leitfähige Material hindurchgeführt sein. So kann das Durchführungselement gemäß einer möglichen als ein Nietelement in das nicht leitfähige Material eingebracht sein.

Erfindungsgemäß können die Kontaktierungsabschnitte auf der ersten Seite und/oder auf der zweiten Seite der Platine gegenübereiner Ebene, die durch eine Oberfläche der ersten Seite beziehungsweise der zweiten Seite der Platine definiert wird, erhaben ausgebildet sein. Ein erhabenes Element des Kontaktierungsabschnitts weist bevorzugt eine flache Oberfläche oder eine Oberfläche mit einer Reliefform auf, die einer Form eines Endanschlusses einer Batteriezelle angepasst ist. Hierdurch wird eine Kontaktierung des Kontaktierungsabschnitts mit einer Batteriezelle verbessert. Bevorzugt ist der Kontaktierungsabschnitt solchermaßen ausgeführt, dass er zwischen 0,1 mm und 0,3 mm aus der Ebene herausragt, die durch die Oberfläche der ersten Seite beziehungsweise die Oberfläche der zweiten Seite der Platine definiert wird.

Es ist vorteilhaft, wenn die Kontaktierungsabschnitte erhabene Kontaktierungspunkte aufweisen. Die Kontaktierungspunkte können dazu dienen, eine wohldefinierte elektrisch und thermisch leitfähige Verbindung zwischen den Kontaktierungsabschnitten und an diesen angrenzenden Batteriezellen herzustellen.

Vorzugsweise ist die Platine flexibel ausgebildet. Hierzu kann die Platine aus flexiblen und/oder elastischen Materialien ausgebildet sein. Beispielsweise kann das nicht elektrisch leitfähige Material aus einem elastischen Polymer ausgebildet sein. Das nicht elektrisch leitfähige Material kann aus einem Polyimid gebildet sein, bei dem es sich bevorzugt um Kapton handelt. Kapton ist chemisch sehr beständig und weist eine sehr hohe Durchschlagfeldstärke auf. Bei dem auf der Platine aufgebrachten elektrisch und thermisch leitfähigen Material, aus dem die Kontaktierungsabschnitte, der Verbindungsabschnitt auf der ersten Seite der Platine, der Verbindungs- und Kontaktierungsbereich auf der zweiten Seite der Platine und das mindestens eine Durchführungselement bestehen, handelt es sich vorteilhafterweise um Metall. Geeignete Metalle weisen eine ausreichende Elastizität bzw. Flexibilität auf, sodass die elektrisch leitenden Abschnitte der Platine bei möglicherweise auftretenden Verformungen der Platine nicht beschädigt werden.. Die Menge des aufgebrachten Metalls ist vorteilhafterweise so dimensioniert sein, dass es bei den möglicherweise auftretenden Verformungen der Platine nicht beschädigt wird, wodurch Abschnitte der Platine ihre elektrische und thermische Leitfähigkeit einbüßen oder verlieren könnten.

Besonders bevorzugt ist in der Platine mindestens eine Kühlleitung vorgesehen, um die Platine zu kühlen. Dabei kann die Kühlleitung die Platine in einer Ebene, die durch die Platine gebildet wird, durchlaufen. Es können erfindungsgemäß mehrere Kühlleitungen in der Platine vorgesehen sein. Die Kühlleitung kann erfindungsgemäß den Kern der Platine durchlaufen.

Vorzugsweise ist an dem Verbund von Leiterbahnen beziehungsweise an der flächigen, elektrisch und thermisch leitfähigen Schicht auf der ersten Seite der Platine und/oder an dem Verbindungs- und Kontaktierungsbereich auf der zweiten Seite der Platine mindestens ein zusätzlicher Kontakt vorgesehen. Hierbei handelt es sich um einen Kontakt, der nicht zur Kontaktierung durch eine Batteriezelle vorgesehen ist. An einen solchen Kontakt kann ein Batteriemanagementsystem angeschlossen werden, sodass beispielsweise eine an der Platine anliegende Spannung gemessen werden kann.

Vorzugsweise ist an der Platine mindestens ein weiterer Kontakt vorgesehen. Der weitere Kontakt kann beispielsweise mit einer Messvorrichtung verbunden sein, die auf der Platine aufgebracht oder in der Platine vorgesehen ist. Hierbei kann es sich um einen Temperaturfühler handeln. Erfindungsgemäß kann der Kontakt auch zum Anschluss eines Bussystems dienen, über das auf der Platine vorgesehene Messvorrichtungen ausgelesen und/oder angesteuert werden können.

Im Folgenden wird auch eine nicht erfindungsgemäße Batterie mit einer Zellanordnung beschrieben, wobei die Zellanordnung mehrere Batteriezellen aufweist, wobei die Zellanordnung mindestens zwei Batterieabschnitte aufweist und jeder Batterieabschnitt aus mehreren Batteriezellen besteht, wobei die Batteriezellen der Batterieabschnitte so ausgerichtet sind, dass Endanschlüsse der Batteriezellen des jeweiligen Batterieabschnitts in einer gemeinsamen ersten Kontaktierungsebene liegen und dass Endanschlüsse der Batteriezellen des jeweiligen Batterieabschnitts in einer gemeinsamen zweiten Kontaktierungsebene liegen, wobei die Batterieabschnitte benachbart zueinander angeordnet sind, wobei jeweils eine erste Kontaktierungsebene eines Batterieabschnitts einer zweiten Kontaktierungsebene eines benachbart angeordneten Batterieabschnitts zugewandt ist und wobei die Kontaktierungsebenen parallel zueinander ausgerichtet sind, wobei zwischen mindestens zwei aufeinanderfolgenden Batterieabschnitten eine zumindest teilweise elektrisch und thermisch leitfähige Verbindungsplatte mit einer ersten Seite und einer zweiten Seite angeordnet ist, die auf der ersten Seite und auf der zweiten Seite jeweils mindestens einen elektrisch und thermisch leitfähigen Kontaktierungsabschnitt aufweist, wobei die der ersten Seite dieser Verbindungsplatte zugewandten Endanschlüsse elektrisch und thermisch leitfähig mit dem mindestens einen Kontaktierungsabschnitt dieser ersten Seite verbunden sind und wobei die der zweiten Seite dieser Verbindungsplatte zugewandten Endanschlüsse elektrisch und thermisch leitfähig mit dem mindestens einen Kontaktierungsabschnitt dieser zweiten Seite verbunden sind, und wobei Kontaktierungsabschnitte der Verbindungsplatte miteinander elektrisch und thermisch leitfähig über die Verbindungsplatte verbunden sind. Die Verbindungsplatte ist als eine Platine ausgebildet, die wie vorangehend beschrieben ausgebildet ist. Dabei ist der Kern thermisch leitfähig mit einer Wärmesenke verbindbar, sodass ein Wärmestrom durch den Kern aufgenommen und aus der Zellanordnung auf die Wärmesenke abgeführt werden kann.

In der Batterie befinden sich jeweils mehrere Batteriezellen in einem Batterieabschnitt. Vorzugsweise handelt es sich bei den Batteriezellen um Rundzellen. Bei diesen hat es sich herausgestellt, dass sie besonders widerstandsfähig gegenüber mechanischen Belastungen sind.

Vorzugsweise weist jede Batteriezelle einen positiven und einen negativen Endanschluss auf und die Batteriezellen der Batterieabschnitte sind so ausgerichtet, dass sämtliche positiven Endanschlüsse der Batteriezellen des jeweiligen Batterieabschnitts in der ersten Kontaktierungsebene liegen und dass sämtliche negativen Endanschlüsse der Batteriezellen des jeweiligen Batterieabschnitts in der zweiten Kontaktierungsebene liegen, wobei die mit dem mindestens einen Kontaktierungsabschnitt der ersten Seite verbundenen Endanschlüsse untereinander über die Verbindungsplatte elektrisch und thermisch leitfähig miteinander verbunden sind, wobei die mit dem mindestens einen Kontaktierungsabschnitt der zweiten Seite verbundenen Endanschlüsse untereinander über die Verbindungsplatte elektrisch und thermisch leitfähig miteinander verbunden sind, und wobei die mit dem mindestens einen Kontaktierungsabschnitt der ersten Seite verbundenen Endanschlüsse elektrisch und thermisch leitfähig mit den mit dem mindestens einen Kontaktierungsabschnitt der zweiten Seite verbundenen Endanschlüssen über die Verbindungsplatte verbunden sind, sodass die Batteriezellen in einer elektrischen und thermischen Reihen- und Parallelschaltung elektrisch leitfähig miteinander verbunden sind. Der Vorteil einer solchen Anordnung besteht darin, dass ein elektrischer Strom und ein thermischer Strom über die gesamte Zellanordnung verteilt werden können. Fällt eine Batteriezelle in einem Batterieabschnitt aus, so beeinträchtigt dies die Leistung der Batterie nur geringfügig, da in dem Batterieabschnitt noch weitere, funktionstüchtige Batteriezellen vorliegen. Unter einem positiven Endanschluss beziehungsweise einem negativen Endanschluss ist ein Pluspol beziehungsweise ein Minuspol einer Batteriezelle zu verstehen.

Die Zellanordnung kann von einem thermisch leitfähigen Gehäuse umschlossen sein. Da das Gehäuse thermisch leitfähig ist, eignet es sich dazu, als eine Wärmesenke Wärme aus der Zellanordnung aufzunehmen und optional an weitere Wärmesenken zu übertragen, mit denen es thermisch leitfähig verbunden ist. Das vorhergehend beschriebene Wärmeabfuhrelement kann mit dem Gehäuse thermisch leitfähig verbunden sein. Das Gehäuse ist vorzugsweise aus einem Metall gefertigt, besonders bevorzugt aus Eisen, Aluminium oder einer Metalllegierung. Ein solches Gehäuse ist dazu geeignet, die Zellanordnung vor äußeren Einwirkungen zu schützen. Das Gehäuse weist vorzugsweise zwei Öffnungen auf, auf welche die Druckplatten aufgesetzt werden. Das Gehäuse kann längliche Aussparungen als Belüftungsschlitze aufweisen.

Die Batteriezellen können so angeordnet sein, dass erste Endanschlüsse einer Kontaktierungsebene eines ersten Batterieabschnitts unmittelbar gegenüberliegend zu zweiten Endanschlüssen einer Kontaktierungsebene eines zweiten Batterieabschnitts angeordnet sind, sodass sämtliche Batteriezellen eines Batterieabschnitts fluchtend mit den Batteriezellen eines benachbarten Batterieabschnitts angeordnet sind. Somit sind Gruppen von Batteriezellen mehrerer Batterieabschnitte reihig zueinander angeordnet.

Vorzugsweise liegen positive Endanschlüsse eines Batterieabschnitts unmittelbar an negativen Endanschlüssen eines benachbarten Batterieabschnitts elektrisch und thermisch leitfähig an. Demgemäß sind zwei oder mehr Batteriezellen in Reihe geschaltet, ohne dass dabei direkt benachbarte Batteriezellen durch eine Platine voneinander separiert sind. Ein solcher Aufbau kann vorgesehen werden, wenn eine ausreichende Verteilung eines elektrischen Strom und eines Wärmestroms innerhalb einer Batterie auch mit einer geringen Zahl von Platinen innerhalb der Zellanordnung möglich ist. Ob dies der Fall ist, wird maßgeblich durch kapazitive und weitere Eigenschaften der Batteriezellen bestimmt.

Es ist bevorzugt, wenn durch die in den beiden äußeren Kontaktierungsebenen der Batterie liegenden Endanschlüsse ein Batterieanfangsbereich und ein Batterieendbereich definiert werden, wobei an dem Batterieanfangsbereich und dem Batterieendbereich jeweils eine Druckplatte angeordnet ist, wobei die Druckplatten über Zugelemente miteinander verbunden sind und dadurch die an der mindestens einen Platine anliegenden Batteriezellen an die mindestens eine Platine andrücken.

Die Komponenten innerhalb der Zellanordnung werden hierdurch miteinander verpresst. Dabei üben die Druckplatten jeweils eine Anpresskraft auf die Batteriezellen aus. Die Druckplatte kann die Anpresskraft an dem Batterieanfangsbereich beziehungsweise an dem Batterieendbereich direkt auf die Batteriezellen ausüben. So kann die Druckplatte unmittelbar an positiven oder an negativen Endanschlüssen der Batteriezellen anliegen. Die Druckplatte kann die Anpresskraft an dem Batterieanfangsbereich beziehungsweise an dem Batterieendbereich alternativ jedoch auch indirekt auf die Batteriezellen ausüben. So kann zwischen der Druckplatte und den Batteriezellen eine zusätzliche Schicht vorgesehen sein. Diese zusätzliche Schicht kann elektrisch leitend oder nichtleitend und/oder elastisch ausgeführt sein.

Die Druckplatten können flächig ausgebildet sein, es sind jedoch auch abweichende Bauformen möglich. Die Zugelemente sind jeweils mit den Druckplatten verbunden. Vorteilhafterweise besteht keine elektrisch leitende Verbindung zwischen den Batteriezellen und den Zugelementen. Dabei sind die Zugelemente solchermaßen zwischen den Druckplatten verspannt, dass sie eine Zugkraft auf die Druckplatten ausüben. Bedingt durch die Zugkraft können die Druckplatten wiederum die bereits beschriebene Anpresskraft auf die Zellanordnung ausüben. Die Anpresskraft wird über alle Batterieabschnitte der Zellanordnung hinweg innerhalb der Batterie übertragen. Dadurch werden die Batteriezellen besonders gut mit der mindestens einen Platine innerhalb der Zellanordnung kontaktiert.

Die Zugelemente können als Stangen, als Rohre oder als sonstige länglich ausgebildete Elemente ausgebildet sein. Vorzugsweise sind die Stangen aus einem Metall, ganz besonders aus Stahl ausgeführt. Insbesondere bei Verwendung eines elektrisch leitenden Materials für die Zugelemente, besteht zwischen den Zugelementen und den Batteriezellen bzw. weiteren stromführenden Komponenten der Batterie vorteilhafterweise keine elektrisch leitende Verbindung. Die Stangen können alternativ jedoch auch aus einem besonders stabilen Kunststoff oder aus einem Verbundmaterial ausgeführt sein.

Es ist vorteilhaft, wenn die Druckplatten als Metallplatten ausgebildet sind. Metallplatten sind ausreichend stabil, sodass über sie eine Zugkraft von den Zugelementen auf die Zellanordnung übertragen werden kann. Die Metallplatten können dabei in Abhängigkeit von einer vorgesehenen Zugkraft unterschiedlich dick ausgeführt sein. Wird eine hohe Zugkraft vorgesehen, so muss die Metallplatte besonders dick ausgeführt sein. Vorzugsweise ist die Metallplatte 3 bis 20 mm dick ausgeführt, ganz besonders bevorzugt ist sie 5 mm dick ausgeführt. Die Metallplatten können aus Kupfer, aus Aluminium oder aus einem sonstigen sehr gut wärmeleitfähigen Material ausgebildet sein. Alternativ ist es möglich, die Druckplatten nicht aus Metall auszuführen. So können die Druckplatten aus einem harten Kunststoff ausgeführt sein.

Bevorzugt sind die Zugelemente durch Zugelementaussparungen in den Druckplatten hindurchgeführt, wobei die Zugelemente in den Zugelementaussparungen mit Hilfe von Muttern an den Druckplatten verschraubt sind. Eine Schraubverbindung erlaubt es, eine durch die Zugelemente auf die Druckplatten auszuübende Zugkraft genau einzustellen. Es sind jedoch auch sonstige Festlegungsmittel verwendbar, um die Zugelemente an den Zugelementaussparungen so festzulegen, dass die Zugelemente eine Zugkraft auf die Druckplatten ausüben.

Weitere vorteilhafte Ausführungsformen der Erfindung bzw. der Offenbarung sind in den Zeichnungen dargestellt. Dabei zeigt:
Fig. 1 eine schematische Darstellung einer erfindungsgemäßen Platine in einer Ansicht auf eine erste Seite der Platine,
Fig. 2 eine schematische Darstellung der Platine gemäß Fig. 1 in einer Ansicht auf eine zweite Seite der Platine,
Fig. 3 eine schematische Darstellung der Platine gemäß Fig. 1 und 2 mit einer Durchführungsaussparung in einer Schnittansieht,
Fig. 4 eine schematische Darstellung einer Zellanordnung einer Batterie mit mehreren Platinen,
Fig. 5 eine schematische Darstellung eines Abschnitts der Zellanordnung der Batterie gemäß Fig. 4 in einer Schnittansicht und
Fig. 6 eine schematische Darstellung der Batterie gemäß Fig. 4 und Fig. 5 mit einem Gehäuse.

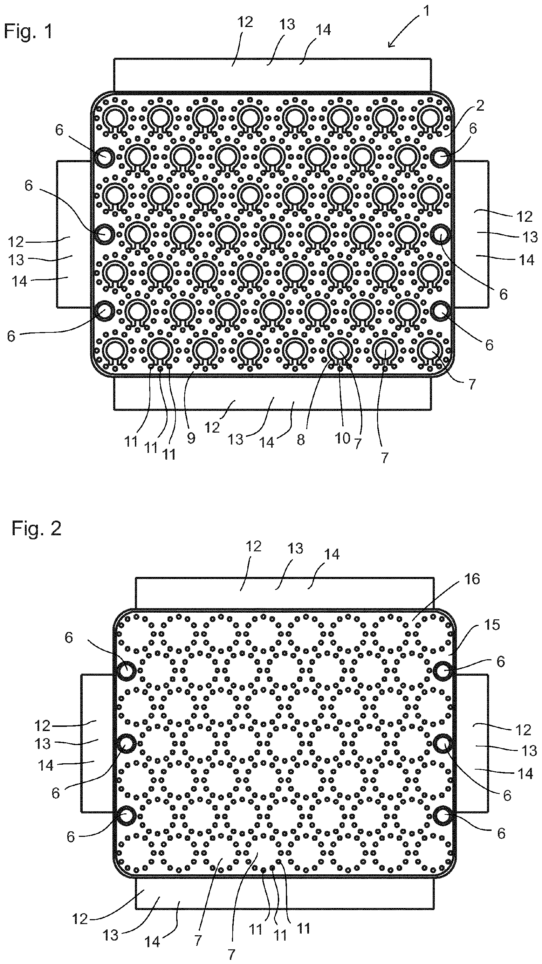

Fig. 1 zeigt eine schematische Darstellung einer erfindungsgemäßen Platine 1 in einer Ansicht auf eine erste Seite 2 der Platine. Es handelt sich vorliegend um eine Platine 1 als Teil einer Zellanordnung 3 mit in ersten Zellebenen 4 und in zweiten Zellebenen 5 versetzt angeordneten Batteriezellen (nicht gezeigt). Die Platine 1 ist hierbei für Zellanordnungen 3 mit sieben ersten und zweiten Zellebenen 4 und 5 geeignet, wobei in den ersten und zweiten Zellebenen 4 und 5 jeweils acht beziehungsweise sieben Batteriezellen (nicht gezeigt) angeordnet sind. Die Platine 1 weist Zugelementaussparungen 6 auf, durch die Zugelemente (nicht gezeigt) hindurchgeführt werden können.

Die Platine 1 ist teilweise aus einem elektrisch nicht leitfähigen Material ausgebildet. Auf das nicht elektrisch leitfähige Material ist auf der ersten Seite der Platine 1 Kupfer als ein elektrisch und thermisch leitfähiges Material flächig aufgebracht. Das Kupfermaterial weist dabei mehrere Kontaktierungsabschnitte 7 auf. Diese sind zur Kontaktierung mit den Endanschlüssen von Batteriezellen geeignet. Zu diesem Zweck sind die Kontaktierungsabschnitte 7 erhaben ausgeführt. Die Kontaktierungsabschnitte 7 sind durch Isolierungsabschnitte 8 aus einem nicht elektrisch leitfähigen Material von einem Verbindungsabschnitt 9 getrennt. Der Verbindungsabschnitt 9 ist flächig ausgebildet. Er verbindet die Kontaktierungsabschnitte 7 miteinander elektrisch und thermisch leitfähig. Durch jeden Isolierungsabschnitt 8 ist eine elektrisch und thermisch leitfähige Leiterbahn 10 hindurchgeführt, die als eine Sicherung dimensioniert ist. Hierdurch werden die Kontaktierungsabschnitte 7 gegenüber einander elektrisch gesichert.

Um jeden Isolierungsabschnitt 8 und damit auch um jeden Kontaktierungsabschnitt 7 sind mehrere Durchführungsaussparungen 11 kreisförmig angeordnet. In jeder Durchführungsaussparung 11 ist ein Durchführungselement (nicht gezeigt) angeordnet, das in der Durchführungsaussparung 11 angeordnet ist. Das Durchführungselement ist aus Kupfer ausgeführt und verbindet den Verbindungsabschnitt 9 der ersten Seite 2 der Platine 1 mit einer zweiten Seite (nicht gezeigt) der Platine 1 elektrisch und thermisch leitfähig. Ein aus einer Batteriezelle in einen Kontaktierungsabschnitt 7 fließender Strom kann somit durch die Leiterbahn 10 und den Verbindungsabschnitt zu der zweiten Seite der Platine 1 geführt werden. Da die Kontaktierungsabschnitte 7 auf der ersten Seite 2 der Platine 1 gegenüber dem Verbindungsabschnitt 9 elektrisch gesichert sind, sind sie auch gegenüber nicht gezeigten Kontaktierungsabschnitten auf der zweiten Seite der Platine 1 gesichert.

In der Platine 1 befindet sich ein Kern 12 aus Kupfer, der sich teilweise seitlich in Bereiche außerhalb der Zellanordnung 3 erstreckt. In diesen Bereichen außerhalb der Platine 1 bildet der Kern 12 ein Wärmeabfuhrelement 13. Vorliegend sind vier Wärmeabfuhrelemente 13 mit jeweils einem ersten flächigen Abschnitt 14 dargestellt. An jedem Wärmeabfuhrelement 13 befindet sich auch ein zweiter flächiger Abschnitt, der jedoch aufgrund der gezeigten Perspektive nicht sichtbar ist.

Fig. 2 zeigt eine schematische Darstellung der Platine 1 gemäß Fig. 1 in einer Ansicht auf eine zweite Seite 15 der Platine 1. Auf der zweiten Seite 15 der Platine 1 befindet sich eine als ein Verbindungs- und Kontaktierungsbereich 16 ausgebildete Kupferschicht. In dem Verbindungs- und Kontaktierungsbereich 16 sind Kontaktierungsabschnitte 7 angeordnet, die zur Kontaktierung mit Endanschlüssen von Batteriezellen geeignet sind. Um jeden Kontaktierungsabschnitt 7 sind mehrere Durchführungsaussparungen 11 kreisförmig angeordnet. Nicht gezeigte Durchführungselemente sind in der Platine 1 wie vorangehend beschrieben in den Durchführungsaussparungen 11 angeordnet.

Vorliegend sind ferner die vier Wärmeabfuhrelemente 13 mit jeweils einem ersten flächigen Abschnitt 14 gezeigt. Auch auf der zweiten Seite der Platine 1 sind die Zugelementaussparungen 6 sichtbar, durch die Zugelemente (nicht gezeigt) hindurchgeführt werden können.

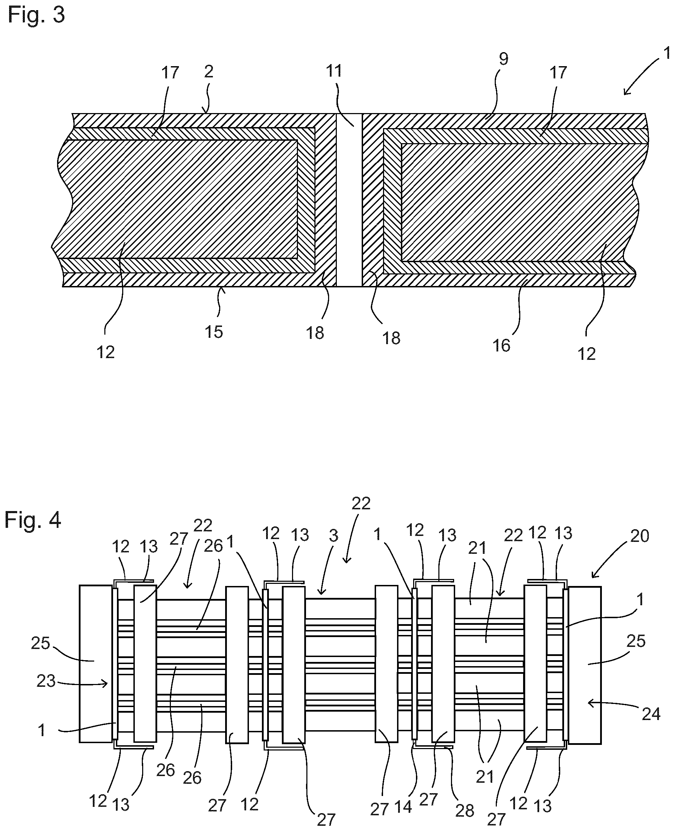

Fig. 3 zeigt eine schematische Darstellung der Platine 1 gemäß Fig. 1 und 2 mit einer Durchführungsaussparung 11 in einer Schnittansicht. Die Platine 1 weist ein elektrisch nicht leitfähiges Substratmaterial 17 auf. Das Substratmaterial 17 umschließt den Kern 12. Auf der ersten Seite 2 der Platine 1 bildet eine Kupferschicht den Verbindungsabschnitt 9. Auf der zweiten Seite 15 der Platine 1 bildet eine Kupferschicht den Verbindungs- und Kontaktierungsbereich 16. Eine Durchführungsaussparung 11 ist durch die Platine 1 hindurchgeführt. Sie durchläuft dabei den Verbindungsabschnitt 9 und den Verbindungs- und Kontaktierungsbereich 16. Auf den Rand der Durchführungsaussparung 11 ist ein Durchführungselement 18 aus Kupfer flächig in einer dünnen Schicht aufgebracht. Das Durchführungselement 18 wird dabei durch das Substratmaterial 17 von dem Kern 12 elektrisch isoliert. Ein thermischer Strom kann jedoch das Substratmaterial 17 durchfließen und über den Kern 12 aus der Platine 1 abgeführt werden.

Fig. 4 zeigt eine schematische Darstellung einer Zellanordnung 3 einer Batterie 20 mit einer Platine 1. In der Zellanordnung 3 sind mehrere Batteriezellen 21 jeweils in einem Batterieabschnitt 22 nebeneinander angeordnet. Die in einem Batterieabschnitt 22 angeordneten Batteriezellen 21 sind miteinander parallel verschaltet. Eine parallele Verschaltung der Batteriezellen 21 wird durch mehrere erfindungsgemäße Platinen 1 ermöglicht. Dafür sind Endanschlüsse der Batteriezellen 21 elektrisch und thermisch leitfähig mit den Platinen 1 verbunden. Die Platinen 1 sind jeweils zwischen zwei Batterieabschnitten 22 angeordnet. Jeder Batterieabschnitt 22 weist eine Höhe von sieben Batteriezellen 21 auf. Batteriezellen 21 benachbarter Batterieabschnitte 22 werden durch die zwischen ihnen angeordneten Platinen 1 in Reihe geschaltet. Die Batteriezellen 21 in der Zellanordnung 3 sind somit sowohl parallel als seriell miteinander verschaltet.

Ein Batterieanfangsbereich 23 und ein Batterieendbereich 24 werden durch positive Endanschlüsse beziehungsweise durch negative Endanschlüsse von Batteriezellen 21 in der Batterie 20 gebildet. Der Batterieanfangsbereich 23 und der Batterieendbereich 24 sind mit äußeren Platinen 1 verbunden. Die äußeren Platinen 1 verbinden die Endanschlüsse der Batteriezellen 21 elektrisch und thermisch leitfähig. Auf einer dem Batterieanfangsbereich 23 beziehungsweise dem Batterieendbereich 24 abgewandten Seite der äußeren Platinen 1 ist jeweils eine Druckplatte 25 angeordnet. Die Druckplatte 25 ist aus Kupfer ausgeführt. Somit ist sie besonders gut wärmeleitfähig.

Die Druckplatten 25 sind durch Zugelemente 26 elektrisch isoliert miteinander verbunden. Die Zugelemente 26 sind dabei solchermaßen mit den Druckplatten 25 verschraubt, dass sie eine Zugkraft auf die Druckplatten 25 ausüben. Dadurch wird die Zellanordnung 3 zusammengedrückt. Insbesondere werden die Batteriezellen 21 an die Platinen 1 gedrückt. Hierdurch wird zwischen den Endanschlüssen der Batteriezellen 21 und den Platinen 1 eine Kontaktfläche vergrößert, sodass ein elektrischer und ein thermischer Strom besser zwischen den Batteriezellen 21 und den Platinen 1 verteilt und damit auch besser über die gesamte Zellanordnung 3 verteilt werden können. Hierdurch werden lokale thermische Hotspots innerhalb der Batterie 20 vermieden. Ferner ist aufgrund der, durch die Zugelemente 26 und die Druckplatten 25 verpressten Zellanordnung 3 die Batterie 20 besonders widerstandsfähig gegenüber mechanischen Belastungen.

Um zu erreichen, dass die Batteriezellen 21 sicher innerhalb der Zellanordnung 3 gehalten werden, sind die Batteriezellen 21 durch mehrere Positionierungsplatten 27 umschlossen. Die Positionierungsplatten 27 umschließen die Batteriezellen 21 in den Batterieabschnitten 22 formschlüssig. Da an den Platinen 1 eine exakte Kontaktierung der Endanschlüsse der Batteriezellen 21 mit den Platinen 1 notwendig ist, sind die Positionierungsplatten 27 vorliegend in der Nähe der Platinen 1 angeordnet.

Die Platinen 1 weisen vorliegend jeweils einen Kern 12 auf, der aus den Platinen 1 seitlich herausgeführt ist. Außerhalb der Platinen 1 bildet der Kern 12 jeweils ein Wärmeabfuhrelement 13. Über das Wärmeabfuhrelement 13 kann Wärme aus der Zellanordnung 3 abgeführt werden. Das Wärmeabfuhrelement 13 weist einen ersten flächigen Abschnitt 14 auf, der in einer Ebene der Platine 1 liegt, sowie einen zweiten flächigen Abschnitt 28, der in einer weiteren Ebene liegt, die in einem rechten Winkel zu der Ebene der Platine 1 ausgerichtet ist. Der zweite flächige Abschnitt 28 ist dazu geeignet, mit einem Gehäuse (nicht gezeigt) oder mit einer Wärmesenke (nicht gezeigt) thermisch leitfähig verbunden zu werden, sodass ein Wärmestrom aus der Platine 1 auf das Gehäuse beziehungsweise auf die Wärmesenke abgeführt werden kann.

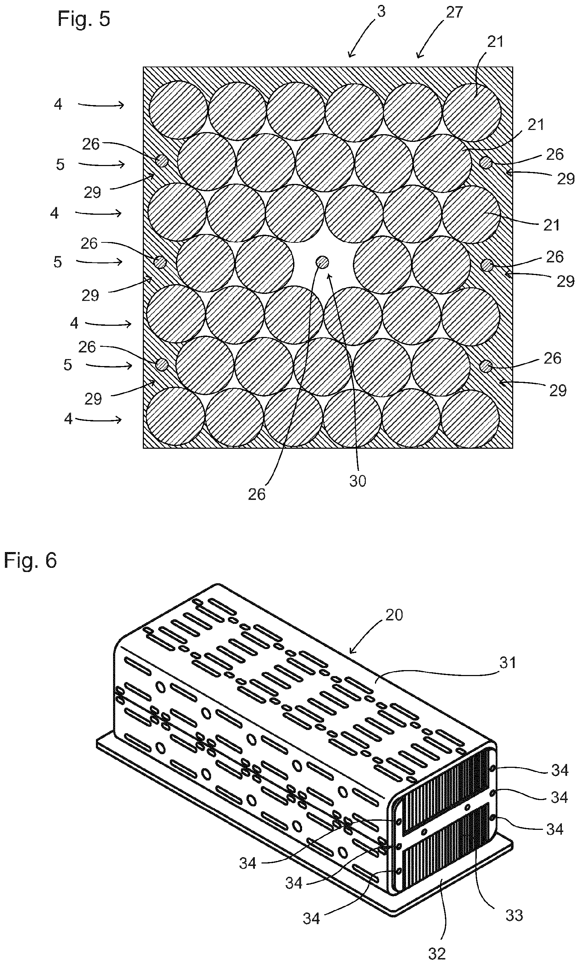

Fig. 5 zeigt eine schematische Darstellung eines Abschnitts der Zellanordnung der Batterie 20 gemäß Fig. 4 in einer Schnittansicht. Dabei sind die Batteriezellen 21 in ersten Zellebenen 4 und zweiten Zellebenen 5 angeordnet. Die Batteriezellen 21 grenzen hierbei unmittelbar aneinander an. Die zweiten Zellebenen 5 weisen jeweils eine Batteriezelle 21 weniger auf als die ersten Zellebenen 4. Hierdurch ergeben sich äußere Durchtrittsabschnitte 29. Durch die äußeren Durchtrittsabschnitte 29 lassen sich Zugelemente 26 hindurchführen. Die äußeren Durchtrittsabschnitte 29 ermöglichen es, möglichst viele Batteriezellen 21 auf einer möglichst geringen Querschnittsfläche einer Zellanordnung 3 anzuordnen. So muss für die Durchführung eines Zugelements 26 in einem Randbereich eines Batterieabschnitts 22 nicht eine gesamte Batteriezelle 21 entfernt werden. Stattdessen wird lediglich aus einer zweiten Zellebene 5 eine Batteriezelle 21 entfernt. Durch die Entfernung der einen Batteriezelle 21 aus der zweiten Zellebene 5 entstehen zwei äußere Durchtrittsabschnitte 29. Durch jeden äußeren Durchtrittsabschnitt 29 können ein oder mehrere Zugelemente 26 hindurchgeführt werden. Vorliegend ist durch jeden äußeren Durchtrittsabschnitt 29 ein Zugelement 26 hindurchgeführt. Um eine gleichmäßige Stabilisierung der Zellanordnung 3 zu erreichen, ist vorliegend jedoch auch ein innerer Durchtrittsabschnitt 30 vorgesehen, in dem keine Batteriezelle 21 angeordnet ist. Durch den inneren Durchtrittsabschnitt 30 ist ein Zugelement 26 hin durchgeführt.

Die Batteriezellen 21 sind in dem Batterieabschnitt durch die Positionierungsplatte 27 umschlossen. In der Positionierungsplatte 27 sind Zugelementaussparungen 6 vorgesehen, durch die die Zugelemente 26 in den äußeren Durchtrittsabschnitten 29 und in den inneren Durchtrittsabschnitt 30 hindurchgeführt sind.

Fig. 6 zeigt eine schematische Darstellung einer Batterie 20 mit einem Gehäuse 31. Das Gehäuse 31 ist aus Eisen ausgeführt und umschließt eine Zellanordnung 3 mit Platinen 1. Dabei können innerhalb des Gehäuses 31 Wärmeabfuhrelemente 13 mit dem Gehäuse 31 verbunden sein, sodass ein thermischer Strom aus der Zellanordnung 3 auf das Gehäuse 31 abgeführt werden kann. Das Gehäuse 31 ist fest mit einer Halteplatte 32 verbunden, die als Wärmesenke dient. Das Gehäuse 31 wird an zwei Stirnseiten durch Druckplatten 25 verschlossen. Die Druckplatten 25 weisen Kühlrippen 33 auf, sodass die Druckplatten 25 dazu beitragen, die Zellanordnung 3 innerhalb des Gehäuses 31 zu kühlen. Nicht gezeigte Zugelemente sind durch die Druckplatten 25 hindurchgeführt und mittels Muttern 34 elektrisch isoliert mit den Druckplatten 25 verschraubt.

### BEZUGSZEICHENLISTE

1. Platine
2. Erste Seite der Platine
3. Zellanordnung
4. Erste Zellebene
5. Zweite Zellebene
6. Zugelementaussparung
7. Kontaktierungsabschnitt
8. Isolierungsabschnitt
9. Verbindungsabschnitt
10. Leiterbahn
11. Durchführungsaussparung
12. Kern
13. Wärmeabfuhrelement
14. Erster flächiger Abschnitt des Wärmeabfuhrelements
15. Zweite Seite der Platine
16. Verbindungs- und Kontaktierungsbereich
17. Substratmaterial
18. Durchführungselement
20. Batterie
21. Batteriezelle
22. Batterieabschnitt
23. Batterieanfangsbereich
24. Batterieendbereich
25. Druckplatte
26. Zugelement
27. Positionierungsplatte
28. Zweiter flächiger Abschnitt des Wärmeabfuhrelements
29. Äußerer Durchtrittsabschnitt
30. Innerer Durchtrittsabschnitt
31. Gehäuse
32. Halteplatte
33. Kühlrippen
34. Mutter

## Patentansprüche

1. Platine (1) zur Verbindung von Batteriezellen (21),
die teilweise aus einem nicht elektrisch leitfähigen Material ausgebildet ist, wobei die Platine (1) auf einer ersten Seite (2) und auf einer zweiten Seite (15) jeweils elektrisch und thermisch leitfähige Kontaktierungsabschnitte (7) aufweist, und
wobei jeder Kontaktierungsabschnitt (7) mit jedem anderen Kontaktierungsabschnitt (7) elektrisch und thermisch leitfähig verbunden ist, wobei in dem nicht elektrisch leitfähigen Material der Platine (1) ein Kern (12) aus einem elektrisch leitfähigen und thermisch leitfähigen Material angeordnet ist,
wobei auf dem Kern (12) abgewandten Seiten des nicht elektrisch leitfähigen Materials jeweils die Kontaktierungsabschnitte (7) angeordnet sind, und wobei mindestens ein elektrisch und thermisch leitfähiges Durchführungselement (18) sich durch den Kern (12) und durch das auf dem Kern (12) beidseitig angeordnete, nicht elektrisch leitfähige Material erstreckt, und
wobei das Durchführungselement (18) gegenüber dem Kern (12) elektrisch isoliert ist und elektrisch leitfähig mit den Kontaktierungsabschnitten (7) auf der ersten Seite (2) und mit den Kontaktierungsabschnitten (7) auf der zweiten Seite (15) verbunden ist, sodass eine elektrische und thermisch leitfähige Verbindung der Kontaktierungsabschnitte (7) auf der ersten Seite (2) mit den Kontaktierungsabschnitten (7) auf der zweiten Seite (15) durch das Durchführungselement (18) hergestellt wird und
ein Wärmestrom durch den Kern (12) aufgenommen und aus der Platine (1) abgeführt werden kann,
**dadurch gekennzeichnet, dass**
auf der ersten Seite (2) der Platine (1) ein elektrisch und thermisch leitfähiger Verbindungsabschnitt (9) angeordnet ist, der die Kontaktierungsabschnitte (7) auf der ersten Seite der Platine (1) elektrisch und thermisch leitfähig miteinander verbindet, und
wobei den Kontaktierungsabschnitten (7) auf der ersten Seite (2) der Platine (1) jeweils eine elektrische Sicherung zugeordnet ist und
der Verbindungsabschnitt (9) auf der ersten Seite (2) der Platine (1) mit jedem Kontaktierungsabschnitt (7) auf der ersten Seite (2) der Platine (1) über die diesem Kontaktierungsabschnitt (7) zugeordnete elektrische Sicherung verbunden ist, sodass die Kontaktierungsabschnitte (7) auf der ersten Seite der Platine (1) gegenüber dem Verbindungsabschnitt (9) elektrisch gesichert sind, wobei das mindestens eine Durchführungselement (18) so angeordnet ist, dass es den Verbindungsabschnitt (9) auf der ersten Seite der Platine (1) mit den Kontaktierungsabschnitten (7) auf der zweiten Seite der Platine (1) elektrisch und thermisch leitfähig verbindet, sodass jeder Kontaktierungsabschnitt (7) auf der ersten Seite (2) gegenüber jedem anderen Kontaktierungsabschnitt (7) auf der ersten Seite (2) der Platine (1) und gegenüber jedem Kontaktierungsabschnitt (7) auf der zweiten Seite (15) der Platine (1) durch mindestens eine elektrische Sicherung gesichert ist.

2. Platine (1) nach Anspruch 1,
**dadurch gekennzeichnet, dass**
der Kern (12) aus einer Kante der Platine (1) mindestens abschnittsweise herausgeführt ist oder an dieser freiliegt.

3. Platine (1) nach Anspruch 2,
**dadurch gekennzeichnet, dass**
der Kern (12) in Umfangsrichtung vollständig aus einer Kante der Platine (1) herausgeführt ist oder an dieser freiliegt.

4. Platine (1) nach einem der vorhergehenden Ansprüche,
**dadurch gekennzeichnet, dass**
der Kern (12) mit einem thermisch leitfähigen Wärmeabfuhrelement (13) thermisch leitfähig verbindbar ist oder dass der Kern (12) ein thermisch leitfähiges Wärmeabfuhrelement (13) bildet, wobei das Wärmeabfuhrelement (13) einen ersten flächigen Abschnitt (14) aufweist, der in einer Ebene der Platine (1) liegt, und wobei das Wärmeabfuhrelement (13) einen zweiten flächigen Abschnitt (28) aufweist, der in einer weiteren Ebene liegt, die in einem rechten Winkel zu der Ebene der Platine (1) ausgerichtet ist.

5. Platine (1) nach einem der vorhergehenden Ansprüche,
**dadurch gekennzeichnet, dass**
der Kern (12) aus einem Metall ausgeführt ist.

6. Platine (1) nach Anspruch 5,
**dadurch gekennzeichnet, dass**
der Kern (12) aus Aluminium ausgeführt ist.

7. Platine (1) nach einem der Ansprüche 1 bis 6,
**dadurch gekennzeichnet, dass**
der Verbindungsabschnitt (9) als eine flächige, elektrisch und thermisch leitfähige Schicht auf der ersten Seite (2) der Platine (1) ausgebildet ist.

8. Platine (1) nach einem der Ansprüche 1 bis 6,
**dadurch gekennzeichnet, dass**
der Verbindungsabschnitt (9) als ein Verbund von Leiterbahnen ausgebildet ist, die miteinander elektrisch und thermisch leitfähig verbunden sind.

9. Platine (1) nach einem der Ansprüche 1 bis 8,
**dadurch gekennzeichnet, dass**
die Kontaktierungsabschnitte (7) auf der zweiten Seite der Platine (1) in einem flächigen, elektrisch und thermisch leitfähigen Verbindungs- und Kontaktierungsbereich (16) auf der zweiten Seite (15) der Platine (1) angeordnet sind.

10. Platine (1) nach Anspruch 9,
**dadurch gekennzeichnet, dass**
der Verbindungsabschnitt (9) auf der ersten Seite (2) mit dem Verbindungs- und Kontaktierungsbereich auf der zweiten Seite (15) durch das elektrisch nicht leitfähige Material hindurch vorzugsweise elektrisch und thermisch leitfähig verbunden ist.

11. Platine (1) nach einem der Ansprüche 1 bis 10,
**dadurch gekennzeichnet, dass**
um jeden Kontaktierungsabschnitt (7) auf der ersten Seite (2) der Platine (1) mehrere Durchführungselemente (18) gleichmäßig von dem Kontaktierungsabschnitt (7) beabstandet angeordnet sind.

12. Platine (1) nach einem der vorhergehenden Ansprüche,
**dadurch gekennzeichnet, dass**
das mindestens eine Durchführungselement (18) auf einem Innenrand einer Durchführungsaussparung (11) angeordnet ist, die das nicht leitfähige Material und den Kern (12) durchläuft.

13. Platine (1) nach einem der vorhergehenden Ansprüche,
**dadurch gekennzeichnet, dass**
die Kontaktierungsabschnitte (7) auf der ersten Seite (2) und/oder auf der zweiten Seite (15) der Platine (1) gegenüber einer Ebene, die durch eine Oberfläche der ersten Seite beziehungsweise der zweiten Seite der Platine (1) definiert wird, erhaben ausgebildet sind.

14. Platine (1) nach einem der vorhergehenden Ansprüche,
**dadurch gekennzeichnet, dass**
die Kontaktierungsabschnitte (7) erhabene Kontaktierungspunkte aufweisen.

## Claims

1. Board (1) for connecting battery cells (21), which is formed in part from an electrically non-conductive material,
wherein the board (1) has on a first side (2) and on a second side (15) in each case electrically and thermally conductive contacting sections (7), and wherein each contacting section (7) is electrically and thermally conductively connected to each other contacting section (7),
wherein a core (12) made of an electrically conductive and thermally conductive material is arranged in the electrically non-conductive material of the board (1), wherein the contacting sections (7) are arranged in each case on the sides of the electrically non-conductive material facing away from the core (12), and wherein at least one electrically and thermally conductive lead-through element (18) extends through the core (12) and through the electrically non-conductive material arranged on both sides of the core (12), and
wherein the lead-through element (18) is electrically insulated from the core (12) and is electrically conductively connected to the contacting sections (7) on the first side (2) and to the contacting sections (7) on the second side (15), such that an electrically and thermally conductive connection of the contacting sections (7) on the first side (2) to the contacting sections (7) on the second side (15) is made by the lead-through element (18) and a heat flow can be absorbed by the core (12) and dissipated from the board (1),
**characterized in that**
on the first side (2) of the board (1), an electrically and thermally conductive connecting section (9) is arranged, which electrically and thermally conductively connects the contacting sections (7) to one another on the first side of the board (1), and
wherein an electrical fuse is assigned to each of the contacting sections (7) on the first side (2) of the board (1) and the connecting section (9) on the first side (2) of the board (1) is connected to each contacting section (7) on the first side (2) of the board (1) via the electrical fuse assigned to this contacting section (7), such that the contacting sections (7) on the first side of the board (1) are electrically secured with respect to the connecting section (9),
wherein the at least one lead-through element (18) is arranged such that it electrically and thermally conductively connects the connecting section (9) on the first side of the board (1) to the contacting sections (7) on the second side of the board (1), such that each contacting section (7) on the first side (2) is secured against each other contacting section (7) on the first side (2) of the board (1) and against each contacting section (7) on the second side (15) of the board (1) by at least one electrical fuse.

2. Board (1) according to claim 1,
**characterized in that**
the core (12) is at least in sections led out of an edge of the board (1) or is exposed on the edge.

3. Board (1) according to claim 2,
**characterized in that**
the core (12) is completely led out of an edge of the board (1) in the circumferential direction or is exposed on the edge.

4. Board (1) according to one of the preceding claims,
**characterized in that**
the core (12) can be thermally conductively connected to a thermally conductive heat dissipation element (13) or **in that** the core (12) forms a thermally conductive heat dissipation element (13),
wherein the heat dissipating element (13) has a first planar section (14) extending in a plane of the board (1), and
wherein the heat dissipating element (13) has a second planar section (28) extending in another plane oriented at a right angle to the plane of the board (1).

5. Board (1) according to one of the preceding claims,
**characterized in that**
the core (12) is made of a metal.

6. Board (1) according to claim 5,
**characterized in that**
the core (12) is made of aluminum.

7. Board (1) according to one of claims 1 to 6,
**characterized in that**
the connecting section (9) is formed as a planar, electrically and thermally conductive layer on the first side (2) of the board (1).

8. Board (1) according to one of claims 1 to 6,
**characterized in that**
the connecting section (9) is formed as a composite of conductor tracks which are electrically and thermally conductively connected to one another.

9. Board (1) according to one of the claims 1 to 8,
**characterized in that**
the contacting sections (7) are arranged on the second side of the board (1) in a planar, electrically and thermally conductive connecting and contacting region (16) on the second side (15) of the board (1).

10. Board (1) according to claim 9,
**characterized in that**
the connecting section (9) on the first side (2) is preferably electrically and thermally conductively connected to the connecting and contacting region on the second side (15) through the electrically non-conductive material.

11. Board (1) according to one of claims 1 to 10,
**characterized in that**
around each contacting section (7) on the first side (2) of the board (1), a plurality of lead-through elements (18) is arranged uniformly spaced apart from the contacting section (7).

12. Board (1) according to one of the preceding claims,
**characterized in that**
the at least one lead-through element (18) is arranged on an inner edge of a lead-through recess (11) which passes through the non-conductive material and the core (12).

13. Board (1) according to one of the preceding claims,
**characterized in that**
the contacting sections (7) on the first side (2) and/or on the second side (15) of the board (1) are elevated with respect to a plane defined by a surface of the first side or the second side of the board (1), respectively.

14. Board (1) according to one of the preceding claims,
**characterized in that**
the contacting sections (7) have elevated contacting points.

## Revendications

1. Carte de circuit (1) pour le raccordement des éléments de batterie (21), qui est en partie formé d'un matériau non électriquement conducteur, dans lequel la carte de circuit (1) comporte sur un premier côté (2) et sur un deuxième côté (15) à chaque fois des sections de contact (7) électriquement et thermiquement conductrices, et
dans lequel chaque section de contact (7) est connectée de manière électriquement et thermiquement conductrice à chaque autre section de contact (7),
dans lequel un noyau (12) en un matériau électriquement conducteur et thermiquement conducteur est disposé dans le matériau non électriquement conducteur de la carte de circuit (1),
dans lequel les sections de contact (7) sont disposées à chaque fois sur les côtés du matériau non électriquement conducteur qui sont opposés au noyau (12), et dans lequel au moins un élément de traversée (18) électriquement et thermiquement conducteur s'étend à travers le noyau (12) et à travers le matériau non électriquement conducteur disposé sur les deux côtés du noyau (12), et
dans lequel l'élément de traversée (18) est isolé électriquement du noyau (12) et est connecté de manière électriquement conductrice aux sections de contact (7) sur le premier côté (2) et aux sections de contact (7) sur le deuxième côté (15), de sorte qu'une connexion électriquement et thermiquement conductrice des sections de contact (7) sur le premier côté (2) avec les sections de contact (7) sur le deuxième côté (15) est établie par l'élément de traversée (18), et
un flux de chaleur peut être absorbé par le noyau (12) et dissipé de la carte de circuit (1),
**caractérisé en ce que**
une section de connexion (9) électriquement et thermiquement conductrice est disposée sur le premier côté (2) de la carte de circuit (1), qui connecte les sections de contact (7) du premier côté de la carte de circuit (1) entre elles de manière électriquement et thermiquement conductrice, et
dans lequel en fusible électrique est associé à chacune des sections de contact (7) sur le premier côté (2) de la carte de circuit (1) et
la section de connexion (9) sur le premier côté (2) de la carte de circuit (1) est connectée à chaque section de contact (7) sur le premier côté (2) de la carte de circuit (1) via le fusible électrique associé à cette section de contact (7), de sorte que les sections de contact (7) sur le premier côté de la carte du circuit (1) sont électriquement sécurisées contre la section de connexion (9),
dans lequel le au moins un élément de traversée (18) est disposé pour connecter de manière électriquement et thermiquement conductrice la section de connexion (9) sur le premier côté de la carte de circuit (1) aux sections de contact (7) sur le deuxième côté de la carte de circuit (1), de sorte que chaque section de contact (7) sur le premier côté (2) est sécurisé contre chaque autre section de contact (7) sur le premier côté (2) de la carte de circuit (1) et contre chaque section de contact (7) sur le deuxième côté (15) de la carte de circuit (1) par au moins un fusible électrique.

2. Carte de circuit (1) selon la revendication 1,
**caractérisé en ce que**
le noyau (12) est sorti d'un bord de la carte de circuit (1) au moins par sections ou est exposé à ce bord.

3. Carte de circuit (1) selon la revendication 2,
**caractérisé en ce que**
le noyau (12) est complètement sorti d'un bord de la carte de circuit (1) dans la direction circonférentielle ou est exposé à ce bord.

4. Carte de circuit (1) selon l'une quelconque des revendications précédentes, **caractérisé en ce que**
le noyau (12) peut être connecté de manière thermiquement conductrice à un élément de dissipation de chaleur (13) thermiquement conducteur, ou **en ce que** le noyau (12) forme un élément de dissipation de chaleur (13) thermiquement conducteur, dans lequel l'élément de dissipation de chaleur (13) comporte une première section plate (14) située dans un plan de la carte de circuit (1), et dans lequel l'élément de dissipation de chaleur (13) comporte une deuxième section plate (28) située dans un autre plan orienté à angle droit par rapport au plan de la carte de circuit (1).

5. Carte de circuit (1) selon l'une quelconque des revendications précédentes, **caractérisé en ce que**
le noyau (12) est constitué d'un métal

6. Carte de circuit (1) selon la demande 5,
**caractérisé en ce que**
le noyau (12) est constitué d'aluminium.

7. Carte de circuit (1) selon l'une quelconque des revendications 1 à 6, **caractérisé en ce que**
la section de connexion (9) est formée comme une couche plate, électriquement et thermiquement conductrice, sur le premier côté (2) de la carte de circuit (1).

8. Carte de circuit (1) selon l'une quelconque des revendications 1 à 6, **caractérisé en ce que**
la section de connexion (9) est formée comme un composite de pistes conductrices qui sont connectées entre elles de manière électriquement et thermiquement conductrice.

9. Carte de circuit (1) selon l'une quelconque des revendications 1 à 8, **caractérisé en ce que**
les sections de contact (7) sur le deuxième côté de la carte de circuit (1) sont disposées dans une zone de connexion et de contact (16) plate, électriquement et thermiquement conductrice, sur le deuxième côté (15) de la carte de circuit (1).

10. Carte de circuit (1) selon la revendication 9,
**caractérisé en ce que**
la section de connexion (9) sur le premier côté (2) est connectée à la zone de connexion et de contact sur le deuxième côté (15) à travers le matériau électriquement non conducteur, de préférence de manière électriquement et thermiquement conductrice.

11. Carte de circuit (1) selon l'une quelconque des revendications 1 à 10, **caractérisé en ce que**
autour de chaque section de contact (7) sur le premier côté (2) de la carte de circuit (1), une pluralité d'éléments de traversée (18) est disposé à distance égale de la section de contact (7).

12. Carte de circuit (1) selon l'une quelconque des revendications précédentes, **caractérisé en ce que**
le au moins un élément de traversée (18) est disposé sur un bord intérieur d'un renfoncement de traversée (11) qui traverse le matériau non conducteur et le noyau (12).

13. Carte de circuit (1) selon l'une quelconque des revendications précédentes, **caractérisé en ce que**
les sections de contact (7) sur le premier côté (2) et/ou le deuxième côté (15) de la carte de circuit (1) sont formées élevés par rapport à un plan défini par une surface du premier côté ou du deuxième côté de la carte de circuit (1), respectivement.

14. Carte de circuit (1) selon l'une quelconque des revendications précédentes, **caractérisé en ce que**
les sections de contact (7) comportent des points de contact élevés.
